# EUROPÄISCHE PATENTSCHRIFT

(11) **EP 1 095 993 B1**
(45) Veröffentlichungstag und Bekanntmachung des Hinweises auf die Patenterteilung: **21.09.2005**
(21) Anmeldenummer: 00121997.1
(22) Anmeldetag: 10.10.2000
(51) Int. Cl.: C09J 7/02, B05D 1/34, B05D 1/42

(54) **Verfahren zur kontinuierlichen Herstellung von selbstklebenden Artikeln durch Beschichtung von zulaufenden bahnförmigen Materialien mit zweikomponentigen Polyurethanen**
Process for the continuous production of pressure sensitive articles by coating a continuously fed web with two-component polyurethanes
Méthode de fabrication en continu d'articles adhésifs par revêtment d'une bande continu avec des polyuréthanes bi-composants

(30) Priorität: 28.10.1999 DE 19951902
(43) Veröffentlichungstag der Anmeldung: 02.05.2001
(73) Patentinhaber: tesa AG, 20253 Hamburg (DE)
(72) Erfinder: Schümann, Uwe, Dr., 25421 Pinneberg (DE); Wappler, Ulrike, 20253 Hamburg (DE); Hirsch, Ralf, 25451 Quickborn (DE); Beckmann, Andreas, 22609 Hamburg (DE); Bernoth, Andree, 22299 Hamburg (DE)

(56) Entgegenhaltungen:
- EP-A- 0 894 841
- FR-A- 2 206 365

## Beschreibung

Die vorliegende Erfindung bezieht sich auf ein Verfahren zur kontinuierlichen Herstellung von selbstklebenden Artikeln wie zum Beispiel von Selbstklebebändem durch Beschichtung von zwei gleichzeitig zulaufenden, flächenparallel übereinander angeordneten, nicht miteinander in Berührung stehenden bahnförmigen Materialien mit einem reaktiven, zweikomponentigen Polyurethan-Trägermaterial, wobei mindestens eines der zulaufenden bahnförmigen Materialien mit einer druckempfindlichen Haftklebemasse (Selbstklebemasse) ausgerüstet ist.

Einseitig selbstklebende Artikel bestehen aus mindestens zwei Schichten (Lagen), nämlich der nicht selbstklebenden Trägerschicht und der darauf aufgetragenen druckempfindlichen Haftklebemasse. Ein doppelseitiges Selbstklebeband ist im Regelfall aus mindestens drei Schichten aufgebaut, nämlich der Trägerschicht und den von beiden Seiten darauf aufgebrachten Haftklebstoffschichten. Ausnahmen sind doppelseitig selbstklebende Artikel, bei denen Träger und Klebstoffschicht identisch sind (sogenannte Einschicht-Produkte).

Die mechanischen Eigenschaften eines Klebebandes (zum Beispiel Reißfestigkeit, Dehnbarkeit, Elastizität) werden im wesentlichen vom Träger bestimmt. Der Träger bestimmt außerdem weitgehend die optischen Eigenschaften eines Klebebandes (Transparenz, Farbe) sowie im Falle eines einseitig selbstklebenden Artikels die Oberflächeneigenschaften der nicht selbstklebenden Seite (Struktur; Rauhigkeit, Oberflächenspannung). Auch die Haftklebeeigenschaften eines selbstklebenden Artikels werden vom Trägermaterial mitbestimmt.

Als Trägermaterialien kommen alle bahnförmigen Materialien in Frage, zum Beispiel Papiere, Gewebe, Vliese, Folien oder Elastomere, jeweils in unterschiedlichen Dicken, Strukturen und Polymerzusammensetzungen.

Die Klebstoffschicht bestimmt in Kombination mit dem jeweils eingesetzten Träger maßgeblich die Haftklebeeigenschaften eines selbstklebenden Artikels, die sich u.a. ausdrücken in Scherstandzeiten, Klebkräften, Kippscherverhalten, Aufziehverhalten, Wiederablösbarkeit und weiteren.

Basis-Polymere moderner Haftklebstoffe sind u.a. Natur- und Synthesekautschuke, Polyacrylate, Blockcopolymere mit Polystyrolblockanteilen, Polyethylenvinylacetate und Polyurethane, die meist in Kombination mit Zusätzen wie Harzen und Weichmachern und/oder sonstigen Hilfsstoffen wie zum Beispiel Antioxidantien, UV-Schutzmitteln oder rheologischen Additiven eingesetzt werden.

Das allgemein übliche Verfahren zur Herstellung von Klebebändern besteht darin, ein separat hergestelltes, bahnförmiges Trägermaterial mit einer haftklebrigen Masse zu beschichten. Die Beschichtung erfolgt dabei zumeist aus einer Lösung heraus, d.h., die Haftklebemasse wird vor der Beschichtung unter Zuhilfenahme von Lösungsmitteln in eine streichfähige Konsistenz überführt.

Die Beschichtung kann aber auch - abhängig von der Polymerzusammensetzung - aus der Schmelze heraus lösungsmittelfrei im Extrusionsverfahren erfolgen. Dieses Verfahren hat sich besonders bei Haftklebstoffen auf Basis von thermoplastischen Elastomeren durchgesetzt.

Ferner kann der Verbund aus Träger und Haftklebemasse auch dadurch hergestellt werden, daß die Haftklebemasse zunächst auf ein dehäsives Medium aufgetragen wird und im Anschluß daran im Kaschierverfahren auf den Träger aufgebracht wird.

Die Beschichtung von bahnförmigen Trägermaterialien mit haftklebrigen Massen als Verfahren zur Herstellung von selbstklebenden Artikeln hat sich vielfach bewährt.

Dennoch gibt es einige prinzipielle Nachteile, die sich insbesondere bei Klebebändern mit hohen oder sehr speziellen Anforderungsprofilen störend bemerkbar machen. So ist in vielen Fällen die Verankerung der Klebmasse auf dem Träger problematisch und erfordert einen weiteren Prozeßschritt, nämlich die Beschichtung mit einem Primer (Vorstrich). Im Falle eines doppelseitigen Klebebandes hat dies naturgemäß auf beiden Seiten zu erfolgen, so daß ein Produktaufbau aus fünf Schichten resultiert. Weiterhin sind mitunter keine maßgeschneiderten Träger am Markt erhältlich, wie sie für spezielle Anwendungen erforderlich sind. Man behilft sich dann entweder mit Verbundsystemen aus Einzelträgern, die nachteilig zum Beispiel mit Primer- und Klebstoffsystemen zusammengefügt werden müssen oder mit dem Auftragen von zusätzlichen Hilfsschichten (zum Beispiel Sperrschichten gegen das Migrieren von Inhaltsstoffen aus dem Träger in die Klebschicht oder Spiegelschichten zum Glätten von rauhen Trägeroberflächen). Es resultieren Komplexitätssteigerungen im Herstellverfahren und letztlich erhöhte Herstellkosten.

Im folgenden sollen beispielhaft einige Klebebänder aus dem umfassenden Stand der Technik dargestellt werden, und zwar solche, bei denen als Trägermaterial Polyurethane oder Polyurethanfolien als Trägermaterial Verwendung finden.

Aus der WO 86/00536 A1 ist ein Laminat bekannt aus einem Polyurethan und einer druckempfindlichen Klebeschicht, wobei das Laminat für eine Tablettenverpackung beziehungsweise -darreichungsform eingesetzt wird. Es wird eine nicht weiter aufbereitete Polyurethanfolie mit einer selbstklebenden Beschichtung versehen, die eine Tablette umschließt und gleichzeitig mit der Tablette auf der Haut des Anwenders verklebt wird.

In der US 5,127,974 A wird ein Laminat aus einer Polyurethanfolie mit einer selbstklebenden Beschichtung erwähnt. Dies Laminat wird dabei speziell zum vorübergehenden Schutz lackierter Oberflächen von Automobilen eingesetzt.

Aus der DE 196 14 620 A1 und der DE 197 33 014 A1 ist ein druckempfindliches, beidseitig mit Klebemassen beschichtetes Selbstklebeband bekannt, dessen Träger von einem formulierten, vernetzten, nicht geschäumten Polyurethan gebildet ist.

Rezeptierungsbestandteile des Trägers sind ein vernetztes, nicht geschäumtes Polyurethan, Füllstoffe und gegebenenfalls weitere Hilfsstoffe.

Gemäß der DE 196 14 620 A1 beträgt der Anteil des Polyurethans am Träger bis zu 50 Gew.-%, vorzugsweise 30 Gew.-% bis 40 Gew.-%, wobei das Polyurethan weichmacherfrei ist. Die Füllstoffe machen 50 Gew.-% bis 70 Gew.-% des Trägers aus.

Gemäß der DE 197 33 014 A1 beträgt der Anteil des Polyurethans am Träger bis zu 50 Gew.-%, vorzugsweise 10 Gew.-% bis 40 Gew.-%. Die Füllstoffe machen 40 Gew.-% bis 70 Gew.-% des Trägers aus, während die Weichmacher und Harze zusammen zu 5 Gew.-% bis 30 Gew.-%, insbesondere 10 Gew.-% bis 25 Gew.-%, eingesetzt sind.

Die Auswahl der Isocyanat-Komponente des Polyurethans richtet sich nach den gezielt einzustellenden Eigenschaften des Trägers. In Frage kommen zum Beispiel Toluylendiisocyanat, Diphenylmethan-4,4'-diisocyanat, Dicyclohexylmethan-4,4'-diisocyanat, Hexamethylendiisocyanat, Isophorondiisocyanat, Gemische der genannten Isocyanate oder chemisch daraus abgeleitete Isocyanate, zum Beispiel dimerisierte oder trimerisierte Typen.

Die Auswahl der mit dem Isocyanat reagierenden Komponente richtet sich ebenfalls nach den in Abhängigkeit vom gewünschten Anforderungsprofil einzustellenden Eigenschaften des Trägers. Beispielsweise kommen in Frage alle Polyesterdiole, -triole und -polyole, Polyetherdiole, -triole und -polyole, Polyetherdiamine, -triamine, -polyamine, hydroxyl-funktionalisiertes Polybutadien sowie alle einwertigen Alkohole (Mono-ole), einwertigen Amine (Mono-amine), Polyether-mono-ole, Polyether-mono-amine oder aus den vier letztgenannten Gruppen abgeleitete Produkte.

Als vorteilhaft hat sich gezeigt, wenn die hydroxyl-funktionalisierten Polybutadiene, die Polyesterdiole, die Polyestertriole, die Polyesterpolyole, die Polyetherdiole, die Polyethertriole, die Polyetherpolyole, die Polyetherdiamine, die Polyethertriamine oder die Polyetherpolyamine ein Molekulargewicht M_{g} ≥ 1000 g/mol aufweisen.

Aufgabe der vorliegenden Erfindung ist es, ein Verfahren zur Verfügung zu stellen, mit dem selbstklebende Artikel kontinuierlich hergestellt werden können, ohne daß das bahnförmige Trägermaterial des selbstklebenden Artikels separat hergestellt und anschließend mit einer haftklebrigen Masse im Direktauftrag oder durch ein Kaschierverfahren beschichtet werden muß, so daß die prinzipiellen Nachteile der herkömmlichen Herstellverfahren für Klebebänder nicht in der Form auftreten können. Der Träger soll sich durch ein variabel und vielfältig einstellbares Eigenschaftsprofil auszeichnen.

Gelöst wird diese Aufgabe durch ein Verfahren, wie es im Hauptanspruch dargelegt ist. Gegenstand der Unteransprüche sind dabei vorteilhafte Weiterbildungen des Verfahrens.

Demgemäß betrifft die Erfindung das im folgenden beschriebene Verfahren zur kontinuierlichen Herstellung von selbstklebenden Artikeln, deren Träger als Basispolymer ein Polyurethan enthält:

Das erfindungsgemäße Verfahren setzt sich dabei aus den folgenden einzelnen Schritten zusammen:
a) Es werden in einem Behälter A im wesentlichen eine Polyol- und in einem Behälter B im wesentlichen eine Isocyanat-Komponente vorgelegt.
b) In einem Mischer werden die Polyol- und die Isocyanat-Komponente gemischt.
c) Die somit gemischte Polyurethanmasse wird auf ein mit einer druckempfindlichen Haftklebemasse beschichtetes Trägermaterial aufgebracht, das sich bevorzugt mit konstanter Geschwindigkeit bewegt.
   auf die Polymethanmasse des Laminats ein zweites Trägermaterial zugeführt wird
d) Das Laminat aus Trägermaterial, Haftklebemasse und Polyurethanmasse wird durch einen Wärmekanal geführt, in dem die Polyurethanmasse aushärtet.
   nach dem Wärmekanal das zweite Trägermaterial abgezogen wird,
e) Das Laminat wird abschließend in einer Wickelstation aufgewickelt.

In einem Vorbereitungsschritt wird das Trägermaterial beid- oder insbesondere einseitig mit einer Haftklebemasse ausgerüstet. Diese Ausrüstung erfolgt in einem üblichen Beschichtungsverfahren, entweder aus einer Lösung heraus oder aus der Schmelze. Das Trägermaterial kann ein dehäsiv ausgerüstetes Medium, zum Beispiel ein Trennpapier oder eine Trennfolie, sein. Es kann aber auch ein beliebiges anderes Trägermaterial sein, zum Beispiel ein Papier, ein Gewebe, ein Vlies, eine Folie oder ein Elastomer, das nach dem letzten Verfahrensschritt einen Teil des Gesamtträgers des selbstklebenden Artikels darstellt.

Für den Fall, daß das Trägermaterial ein dehäsiv ausgerüstetes Medium ist, wird die Polyurethanmasse derartig auf das mit einer druckempfindlichen Haftklebemasse beschichtete Trägermaterial aufgebracht, daß sich die Polyurethanmasse auf der druckempfindlichen Haftklebemasse befindet. Für den Fall, daß es sich beim Trägermaterial nicht um ein dehäsiv ausgerüstetes Medium handelt, wird die Polyurethanmasse bevorzugt auf die Seite des Trägermaterials aufgebracht, auf der sich keine druckempfindliche Haftklebemasse befindet. Alternativ kann aber auch in diesem Fall die Polyurethanmasse auf die druckempfindliche Haftklebemasse aufgetragen werden. Dann sollte auf der außen befindlichen Seite des Trägermaterials eine weitere Schicht Kleber aufgebracht werden.

Es wird auf die Polyurethanmasse des Laminats ein zweites Trägermaterial mit bevorzugt konstanter Geschwindigkeit zugeführt.

In einer bevorzugten Ausführungsform des Verfahrens ist das zweite Trägermaterial mit einer druckempfindlichen Haftklebemasse ausgerüstet.

In diesem Fall ist ein zusätzlicher Vorbereitungsschritt erforderlich, in dem der erste Vorbereitungsschritt sinngemäß wiederholt wird, wobei weder die Haftklebemasse noch das bahnförmige Material mit denen aus dem ersten Vorbereitungsschritt identisch sein müssen.

Es wird nach dem Wärmekanal das zweite Trägermaterial abgezogen.

Weiterhin vorteilhaft sind weitere Behälter vor dem Mischer vorhanden, in denen sich Katalysatoren, Weichmacher, Farbstoffe und andere Zusatzstoffe befinden, die vorgelegt und zugesetzt werden können.

Die Beschichtung mit dem reaktiven, zweikomponentigen Polyurethan auf das erste Trägermaterial erfolgt bevorzugt an einer üblichen Standard-Beschichtungsanlage für die Herstellung von Klebebändern.

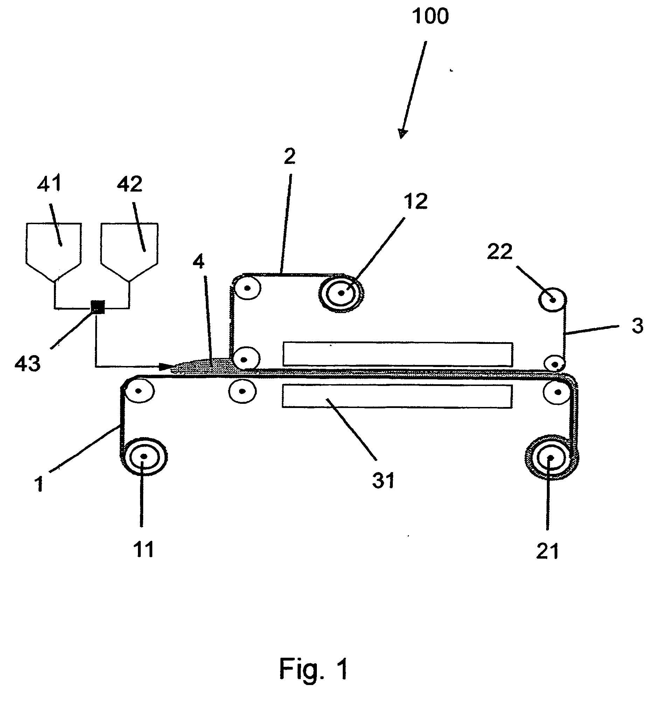

In der Figur 1 ist eine solche Anlage in einer bevorzugten Ausführungsform dargestellt.

Die Anlage 100 verfügt über zwei Ballenabwicklungen 11, 12 für die zulaufenden Materialien 1 und 2, weiterhin über eine Produktaufwickelstation 21 sowie eine Ballenaufwicklung 22 für ein gegebenenfalls ausgedecktes Hilfsmaterial 3. Weiterhin weist die Anlage 100 einen Wärmekanal 31 auf, in dem die Aushärtung der Polyurethanmasse 4 erfolgt.

Die zulaufenden, bahnförmigen Materialien 1 und 2 werden so geführt, daß die Beschichtung der Polyurethanmasse 4 direkt in den Spalt zwischen den beiden Materialien 1 und 2 erfolgen kann. Die Spaltbreite ist variabel und frei einstellbar.

Hinter dem Spalt ist eine hier nicht gezeigte Bahnführung des zweiten Trägermaterials 2 über ein Gurtband vorteilhaft im Hinblick auf das Erreichen einer guten Dickenkonstanz des Polyurethan-Trägermaterials 4.

Für den Fall eines einseitig selbstklebenden Artikels können die obere Ballenabwicklung sowie die Ballenaufwicklung für das auszudeckende Hilfsmaterial 3 gegebenenfalls entfallen.

Alternativ kann ein dehäsiv ausgerüstetes Material zum Einsatz kommen, das lediglich die Funktion hat, die Welle und das reaktive Polyurethan nicht miteinander in Kontakt treten zu lassen, um Polyurethan-Aushärtungen an der Welle zu vermeiden.

Die reaktive Polyurethan-Trägermasse 4 wird unmittelbar vor dem Auftrag aus zwei chemisch miteinander reagierenden Komponenten, nämlich einer im Regelfall vorformulierten Polyol-Komponente (A) und einer Isocyanat-Komponente (B), die sich jeweils in einem Behälter 41 beziehungsweise 42 befinden, in einem Mischkopf (dynamischer Mischer) oder einem Mischrohr (statischer Mischer) einer üblichen Zweikomponenten-Misch- und Dosieranlage 43 kontinuierlich hergestellt und direkt zwischen den zulaufenden, bahnförmigen Materialien 1 und 2 aufgetragen.

Als Zweikomponenten-Misch- und Dosieranlage 43 kommt jede entsprechende handelsübliche Anlage in Frage, die zum Gießen geeignet ist und für kurze Topfzeiten von im Regelfall unter einer Minute ausgelegt ist. Dies kann sowohl bei einem statischen als auch bei einem dynamischen Mischsystem gegeben sein. Um die zulaufenden Materialien 1 und gegebenenfalls 2 in ihrer vollen Breite mit dem Polyurethan-Trägermaterial 4 beschichten zu können, ist es vorteilhaft, den Mischkopf oder das Mischrohr beweglich an einer Traversiereinrichtung zu installieren, die dann oszillierend permanent die Breite der zulaufenden Materialien abfährt.

Im anschließenden Wärmekanaldurchlauf 31 härtet die reaktive Polyurethanmasse 4 zu dem gewünschten Trägermaterial aus und bindet sich in der Regel chemisch an die Zulaufmaterialien, also insbesondere Klebebeschichtungen, an. Die Anbindung an ein Acrylat erfolgt zum Beispiel durch Ausbildung eines Carbonsäureamids. Nach dem Kanaldurchlauf 31 wird das fertige Endprodukt aufgewickelt.

Der Wärmekanaldurchlauf 31 wird bevorzugt auf Temperaturen zwischen 20 °C und 120 °C gehalten.

Für den Fall eines doppelseitigen Klebebandes wird ein dreischichtiger Produktaufbau, bestehend aus Klebmasse, Polyurethan-Träger, Klebmasse erhalten. Es wird kein Primer und keine sonstige Zusatzschicht benötigt. Die Trägerdicke läßt sich bequem über die Spaltbreite am Auftragswerk einstellen. Da die Polyurethan-Komponenten (A) und (B) kein Lösungsmittel enthalten, können mit diesem Verfahren auch sehr dicke Träger blasenfrei hergestellt werden.

In einer möglichen Ausführungsform weist der Träger eine Dicke von 0,1 bis 50 mm, vorzugsweise 0,4 bis 20 mm auf. Die Klebmasse hat vorzugsweise ein Auftragsgewicht von 10 g/m² bis 100 g/m².

Als Polyurethan-Trägermaterial kommen alle Materialien in Frage, die als Basispolymer ein Polyurethan enthalten und in einem Zweikomponenten-Mischverfahren herstellbar sind. Die Vielfalt der Polyurethan-Chemie, die sich sowohl aus der Fülle der von der chemischen Rohstoffindustrie bereitgestellten Polyurethan-Bausteine, als auch aus den diversen Möglichkeiten der Compoundierung mit Füllstoffen, Harzen, Weichmachern, anderen Polymeren, zum Beispiel Epoxiden, Acrylaten, Natur- und Synthesekautschuken, Ethylenvinylacetaten, Blockcopolymeren mit Polystyrolblockanteilen und sonstigen Zusatzstoffen wie etwa Alterungsschutzmitteln, UV-Schutzmitteln oder rheologischen Additiven ergibt, ermöglicht es, nach diesem Verfahren für viele Anwendungsfelder maßgeschneiderte, selbstklebende Artikel bereitzustellen.

Weiterhin kommen als Polyurethan-Trägermaterial auch alle geschäumten Materialien in Frage, die als Basispolymer ein Polyurethan enthalten und in einem Mehrkomponenten-Mischverfahren herstellbar sind. Die Schaumstruktur kann dabei sowohl chemisch, zum Beispiel durch eine während des Mischvorganges ausgelöste Isocyanat/Wasser-Reaktion oder durch Treibmittel, als auch physikalisch durch den Eintrag eines Gases (zum Beispiel Stickstoff oder Luft) erreicht werden. Der Gaseintrag kann sowohl bei der Herstellung der A- oder B-Komponente als auch direkt am Mischkopf einer Mehrkomponenten-Misch- und Dosieranlage realisiert werden. Das in den Mischkopf eingebrachte Gas stellt quasi den Sonderfall einer dritten Komponente dar.

Auf die Darstellung des Wissensstandes der Polyurethan-Chemie im "Kunststoff-Handbuch, 7, Polyurethane, Becker/Braun (1993)" sei ausdrücklich hingewiesen.

Eine mögliche Ausführungsform des Trägers umfaßt als Rezeptierungsbestandteile ein vernetztes, nicht geschäumtes Polyurethan, Füllstoffe und gegebenenfalls weitere Hilfsstoffe.

Der Anteil des Polyurethans am Träger beträgt bis zu 50 Gew.-%, vorzugsweise 30 Gew.-% bis 40 Gew.-%, wobei das Polyurethan weichmacherfrei ist. Die Füllstoffe machen 50 Gew.-% bis 70 Gew.-% des Trägers aus.

Die Auswahl der Isocyanat-Komponente des Polyurethans richtet sich nach den gezielt einzustellenden Eigenschaften des Trägers. In Frage kommen zum Beispiel Toluylendiisocyanat, Diphenylmethan-4,4'-diisocyanat, Dicyclohexylmethan-4,4'-diisocyanat, Hexamethylendiisocyanat, Isophorondiisocyanat, Gemische der genannten Isocyanate oder chemisch daraus abgeleitete Isocyanate, zum Beispiel dimerisierte oder trimerisierte Typen.

Die Auswahl der mit dem Isocyanat reagierenden Komponente richtet sich ebenfalls nach den in Abhängigkeit vom gewünschten Anforderungsprofil einzustellenden Eigenschaften des Trägers. Beispielsweise kommen in Frage alle Polyesterdiole, -triole und-polyole, Polyetherdiole, -triole und -polyole, Polyetherdiamine, -triamine, -polyamine, hydroxyl-funktionalisiertes Polybutadien sowie alle einwertigen Alkohole (Mono-ole), einwertigen Amine (Mono-amine), Polyether-mono-ole, Polyether-mono-amine oder aus den vier letztgenannten Gruppen abgeleitete Produkte.

Als vorteilhaft hat sich gezeigt, wenn die hydroxyl-funktionalisierten Polybutadiene, die Polyesterdiole, die Polyestertriole, die Polyesterpolyole, die Polyetherdiole, die Polyethertriole, die Polyetherpolyole, die Polyetherdiamine, die Polyethertriamine oder die Polyetherpolyamine ein Molekulargewicht M_{g} ≥ 1000 g/mol aufweisen.

Neben den oben aufgezählten Isocyanat-Komponenten und den damit reagierenden Komponenten können aber auch andere Edukte zur Bildung des Polyurethans verwendet werden, ohne den Erfindungsgedanken zu verlassen.

Um die Reaktion zwischen der Isocyanat-Komponente und der mit dem Isocyanat reagierenden Komponente zu beschleunigen, können alle dem Fachmann bekannten Katalysatoren wie zum Beispiel tertiäre Amine oder zinnorganische Verbindungen eingesetzt werden.

Polyurethane wie oben beschrieben werden beispielsweise in "Ullmann's Encyclopedia of Industrial Chemistry, Vol. A21: Polyurethanes" erwähnt.

In einer besonders bevorzugten Ausführungsform wird zur Bildung des Polyurethans ein NCO/OH-Verhältnis von 1,0 bis 1,3 eingestellt, vorzugsweise 1,0 bis 1,1.

Der bevorzugte Mono-ol-OH-Anteil am Gesamt-OH-Anteil, d.h., der bevorzugte Kettenabbruchsanteil, liegt zwischen 5 % und 40 %, insbesondere zwischen 10 % und 30 %.

Als Füllstoffe können sowohl verstärkende, wie zum Beispiel Ruß, als auch nicht verstärkende, wie zum Beispiel Kreide oder Bariumsulfat, eingesetzt werden. Weitere Beispiele sind Talkum, Glimmer, pyrogene Kieselsäure, Silikate, Zinkoxid, Mikroballons, Mikrovollglaskugeln, Mikrohohlglaskugeln und/oder Mikrokunststoffkugeln aller Art. Auch Mischungen der genannten Stoffe können eingesetzt werden.

Bei den Mikroballons handelt es sich um elastische, thermoplastische Hohlkugeln, die eine Polymerhülle aufweisen. Diese Kugeln sind mit niedrigsiedenden Flüssigkeiten oder verflüssigtem Gas gefüllt. Als Polymere für die Hülle sind insbesondere Acrylnitril, PVDC, PVC oder Acrylate geeignet. Als niedrigsiedende Flüssigkeit kommen Kohlenwasserstoffe wie die niederen Alkane, beispielsweise Pentan, als verflüssigtes Gas Chemikalien wie Isobutan in Frage.

Besonders vorteilhafte Eigenschaften zeigen sich, wenn es sich bei den Mikroballons um solche handelt, die bei 25 °C einen Durchmesser aufweisen von 3 µm bis 40 µm, insbesondere 5 µm bis 20 µm.

Durch Wärmeeinwirkung dehnen sich die Kapseln irreversibel aus und expandieren dreidimensional. Die Expansion ist beendet, wenn der Innen- und Außendruck sich ausgleichen. So erzielt man einen geschlossenzelligen Schaumträger, welcher sich durch gutes Auffließverhalten und hohe Rückstellkräfte auszeichnet.

Nach der thermischen Expansion aufgrund erhöhter Temperatur weisen die Mikroballons vorteilhafterweise einen Durchmesser von 20 µm bis 200 µm auf, insbesondere 40 µm bis 100 µm.

Zur Erhöhung der Alterungsstabilität des Polyurethans kann dies mit üblichen Alterungsschutzmitteln, die je nach Anwendungsfall aus der Klasse der verfärbenden oder der nicht verfärbenden Alterungsschutzmittel stammen können, und zwar im Bereich zwischen 0 Gew.-% und 5 Gew.-% sowie bekannten Lichtschutzmitteln im Bereich zwischen 0 Gew.-% und 5 Gew.-% oder Ozonschutzmitteln im Bereich zwischen 0 Gew.-% und 5 Gew.-% abgemischt werden.

Zur Erzielung von Blasenfreiheit können darüber hinaus Trockenmittel, wie beispielsweise Calciumoxid oder Molekularsieb-Zeolithe der Rezeptur beigemischt werden, insbesondere im Bereich zwischen 0 Gew.-% und 10 Gew.-%.

Alle genannten Hilfsstoffe können je nach Einsatzzweck entweder allein oder in beliebiger Kombination miteinander zur Herstellung der Polyurethanmasse eingesetzt werden, um eine optimale Abstimmung auf die Verwendung zu erhalten. Durch den Einsatz dieser Zusatzstoffe ist auch die Schwarzfärbung, wie sie insbesondere von der Kraftfahrzeugindustrie gefordert wird, problemlos möglich.

Die A- und B-Komponenten werden entweder direkt käuflich erworben oder nach üblichen Misch- oder Herstellverfahren, die dem Stand der Technik entsprechen, zum Beispiel je nach rheologischer Einstellung und Füllstoffgehalt in einem Rührkessel, in einem Planetenmischer oder in einem Dissolver aus käuflich erworbenen Einzelkomponenten hergestellt.

Das besondere Merkmal des erfindungsgemäßen Verfahrens ist die inverse Art der Beschichtung.

Es wird nicht, wie sonst üblich, eine Haftklebemasse auf einen Träger aufgetragen, sondern ein reaktives, zunächst flüssiges Trägermaterial auf eine vorgelegte Haftklebemasse oder gegebenenfalls auf andere Zulaufmaterialien, von denen mindestens eines mit einer druckempfindlichen Haftklebemasse ausgerüstet ist.

Ein Vorteil des Verfahrens besteht darin, eine gute Verankerung zwischen dem Polyurethan-Trägermaterial und den zulaufenden, bahnförmigen Materialien, also zum Beispiel der Haftklebemasse erreichen zu können, ohne auf Primer oder ähnliche Hilfsschichten zurückgreifen zu müssen. Dies ist dadurch bedingt, daß das Polyurethan-Trägermaterial zum Zeitpunkt der Beschichtung aufgrund von noch nicht sofort umgesetztem Isocyanat reaktiv ist und sich somit an vielen Substraten chemisch spontan anbindet.

Ein anderer Vorteil ist die Einfachheit des Verfahrens, die es erlaubt, in maximal drei Beschichtungsschritten (Herstellung des zulaufenden Materials 1, gegebenenfalls Herstellung des zulaufenden Materials 2, Beschichtung mit dem Polyurethan-Trägermaterial) auch komplex aufgebaute, d.h. einen Trägerverbund enthaltende selbstklebende Artikel unter Erlangung besonderer Kostenvorteile herstellen zu können.

Im Anschluß an die Beschichtung mit dem zweikomponentigen Polyurethan ist kein weiterer Beschichtungs- oder Kaschierschritt zur Herstellung des selbstklebenden Artikels notwendig.

Ein weiterer Vorteil des Verfahrens ist es, eine besondere Vielfalt an selbstklebenden Artikeln herstellen zu können. Diese Vielfalt ergibt sich aus den oben dargestellten vielfältigen Möglichkeiten der Polyurethan-Chemie und aus den vielfältigen Möglichkeiten im Hinblick auf die zulaufenden Materialien 1 und 2.

Anhand der folgenden Beispiele soll die Erfindung näher beschrieben werden, ohne damit die Erfindung einschränken zu wollen.

Die folgenden Prüfmethoden wurden eingesetzt, um die nach dem beschriebenen Verfahren hergestellten Muster kurz zu charakterisieren:
- Die Klebkraft wurde nach BDF JOPMA002 bestimmt.
   Nach dieser Methode wurde das zu prüfende Klebebandmuster auf den Haftgrund (Stahl) aufgebracht und anschließend unter definierten Bedingungen in einer Zugprüfmaschine abgezogen. Der Abzugswinkel betrug jeweils 180°, die Abzugsgeschwindigkeit 300 mm/min. Die zum Abziehen erforderliche Kraft ist die Klebkraft.
- Die Bestimmung der Reißfestigkeit und Reißdehnung erfolgte im Zugversuch nach BDF JOPMC001.
   Dabei wurde ein Prüfstreifen von 100 mm Länge und 25 mm Breite in einer Zugprüfmaschine mit definierter Klemmgeschwindigkeit (300 mm/min) solange in Längsrichtung belastet, bis er riß. Ermittelt wurden die Reißfestigkeit bezogen auf den Probenquerschnitt sowie die Dehnung bei der Reißkraft.
- Die Stauchhärte wurde nach DIN 53577 bestimmt.
   Die Stauchhärte ist die zu einer festgelegten Verformung (in den Beispielen 14 %) beim Belastungsvorgang ermittelte Druckspannung. Die Ermittlung erfolgte in einer Druckprüfmaschine. Die Maße der Probekörper betrugen 30mm x 30mm x 15 mm (LxBxH). Die Höhe der Probekörper wurde durch Stapelung der Klebstreifen eingestellt.

In den Beispielen erfolgte die Beschichtung auf einer Anlage der Firma Pagendarm. Die Anlage verfügte über die in der Figur 1 dargestellten Möglichkeiten der Ab- und Aufwicklung für die zulaufenden Materialien 1 und 2 mit einer Bahnbreite von 50 cm. Die Beschichtungsspaltbreite war zwischen 0 und 1 cm variabel einstellbar. Die Länge des Wärmekanals betrug ca. 12 m. Die Temperatur im Wärmekanal war in vier Zonen einteilbar und jeweils zwischen Raumtemperatur und 120 °C frei wählbar.

Es wurde eine Zweikomponenten-Misch- und Dosieranlage der Firma Spritztechnik-EMC verwendet. Das Mischsystem war dynamisch. Der Mischkopf war für zwei flüssige und eine dritte gasförmige Komponente konzipiert. Der Mischrotor hatte eine variable Drehzahl bis max. ca. 5000 U/min. Bei den Dosierpumpen dieser Anlage handelte es sich um Zahnradpumpen mit einer Förderleistung von max. ca. 2 l/min.

Die A-Komponenten wurden in einem evakuierbaren Dissolver der Firma Drais gefertigt.

### Beispiele

### Beispiel 1

Zur Herstellung eines speziellen Abdeckbands (Masking Tape), das dazu dient, während des Lackierprozesses in der Automobil-Serienfertigung Fensterflansch-Klebfugen nach dem Auftragen der ersten Lackschicht (KTL-Lack) abzudecken, und so vor den weiteren Lackschichten, die bei Temperaturen bis 180 °C eingebrannt werden, zu schützen, wurde das Verfahren in der folgenden Weise eingesetzt:

### 1. Verfahrensschritt (Vorbereitungsschritt), Herstellen des zulaufenden Materials 1:

Eine 23 µm dicke Polyesterfolie (Polyethylenterephthalat) wurde in einem üblichen Beschichtungsprozeß mit einer bekannten Naturkautschuk-basierten Haftklebemasse, bestehend aus

| | |
|---|---|
| 48 % | Naturkautschuk CV50 |
| 23 % | Poly-beta-Pinenharz |
| 5 % | Terpenphenolharz |
| 3 % | Kolophoniumharz |
| 7 % | Copolymer aus Acrylnitril und Butadien |
| 8 % | Zinkoxid |
| 5 % | reaktivem Alkylphenolharz und |
| 1 % | 2,5 Di-(tertiär-Amyl)-hydrochinon |

aus einer Lösung heraus mit einer Auftragsstärke von ca. 25 µm beschichtet und beim Aufwickeln mit einem handelsüblichen Trennpapier eingedeckt.

### 2. Verfahrensschritt, Polyurethan-Beschichtung:

Die mit der Haftklebemasse ausgerüstete Polyesterfolie wurde im 2. Verfahrensschritt von der nicht klebenden Seite her mit einer entgasten, zweikomponentigen Polyurethan-Trägermasse bei einer Geschwindigkeit von 1 m/min beschichtet. Die Auftragsstärke betrug 120 µm. Die Aushärtung erfolgte bei einer Kanaltemperatur von 80 °C.

Die Polyurethan-Trägermasse setzte sich wie folgt zusammen:

| | Rohstoff | Gewichtsanteil [Gew.-%] |
|---|---|---|
| A-Komponente | Arcol 1030 ® | 30,0 |
| | Arcol 1074 ® | 10,0 |
| | Dibutylzinndilaurat | 0,2 |
| | Calciumoxid | 5,0 |
| | Bayferrox 3920 ® | 1,0 |
| | Omyacarb 4BG ® | 28,3 |
| B-Komponente | Vestanat IPDI ® | 25,5 |

Das so erhaltene Klebeband wies eine Reißfestigkeit von 30,3 N/mm² bei einer Reißdehnung von 43,4 % auf. Die Klebkraft auf Stahl betrug 4,9 N/cm.

Das Klebeband war überlackierbar und im Hinblick auf die Lack-Einbrennbedingungen ausreichend temperaturstabil.

### Beispiel 2

Zur Herstellung eines speziellen Abdeckbands, das wie in Beispiel 1 dazu dient, während des Lackierprozesses in der Automobil-Serienfertigung Fensterflansch-Klebfugen nach dem Auftragen der ersten Lackschicht (KTL-Lack) abzudecken, und so vor den weiteren Lackschichten, die bei Temperaturen bis 180 °C eingebrannt werden, zu schützen, und das weiterhin so flexibel ist, daß es leicht in Kurven verklebbar ist, wurde das Verfahren in der folgenden Weise eingesetzt:

### 1. Verfahrensschritt (Vorbereitungsschritt), Herstellen des zulaufenden Materials 1:

Eine lösungsmittelbasierte Acrylat-Haftklebemasse, bestehend aus Butylacrylat (47,5%), Ethylhexylacrylat (47,5%), Glycidylmethacrylat (2%), Acrylsäure (3%) und geringen Mengen eines bekannten Vernetzers wurde in einer Auftragsstärke von 40 g/m² auf handelsüblichern doppelseitigen Trennpapier ausgestrichen, getrocknet, vernetzt und anschließend aufgewickelt.

### 2. Verfahrensschritt, Polyurethan-Beschichtung:

Die auf dem Trennpapier ausgestrichene Acrylat-Haftklebemasse wurde im 2. Verfahrensschritt direkt mit einer entgasten, zweikomponentigen Polyurethan-Trägermasse bei einer Geschwindigkeit von 3 m/min beschichtet. Die Auftragsstärke betrug 250 µm. Die Aushärtung erfolgte bei einer Kanaltemperatur von 60 bis 70 °C.

Die Polyurethan-Trägermasse setzte sich wie folgt zusammen:

| | Rohstoff | Gewichtsanteil [Gew.-%] |
|---|---|---|
| A-Komponente | Poly THF 250 ® | 14,3 |
| | Poly THF 650 ® | 37,6 |
| | Dibutylzinndilaurat | 0,1 |
| | Calciumoxid | 10,0 |
| | Bayferrox 3920 ® | 1,3 |
| | Aerosil R 202 ® | 2,0 |
| B-Komponente | Desmodur CD ® | 34,7 |

Das so erhaltene Klebeband wies eine Reißfestigkeit von 20,0 N/mm² bei einer Reißdehnung von 195 % auf. Die Klebkraft auf Stahl betrug 2,5 N/cm. Das Klebeband war überlackierbar, im Hinblick auf die Lack-Einbrennbedingungen ausreichend temperaturstabil und in Kurven verklebbar.

### Beispiel 3

Zur Herstellung eines elastischen, sandstrahlbeständigen, stanzbaren Schablonen-Klebebandes wurde das Verfahren in der folgenden Weise eingesetzt:

### 1. Verfahrensschritt (Vorbereitungsschritt), Herstellen des zulaufenden Materials 1:

Eine lösungsmittelbasierte Acrylat-Haftklebemasse, bestehend aus Butylacrylat (47,5%), Ethylhexylacrylat (47,5%), Glycidylmethacrylat (2%), Acrylsäure (3%) und geringen Mengen eines bekannten Vernetzers wurde in einer Auftragsstärke von 40 g/m² auf handelsüblichem doppelseitigen Trennpapier ausgestrichen, getrocknet, vernetzt und anschließend aufgewickelt.

### 2. Verfahrensschritt, Polyurethan-Beschichtung:

Die auf dem Trennpapier ausgestrichene Acrylat-Haftklebemasse wurde im 2. Verfahrensschritt direkt mit einer entgasten, zweikomponentigen Polyurethan-Trägermasse bei einer Geschwindigkeit von 3 m/min beschichtet. Die Auftragsstärke betrug 875 µm. Die Aushärtung erfolgte bei einer Kanaltemperatur von 60 bis 70 °C.

Die Polyurethan-Trägermasse setzte sich wie folgt zusammen:

| | Rohstoff | Gewichtsanteil [Gew.-%] |
|---|---|---|
| A-Komponente | Arcol 1042 ® | 29,0 |
| | Dibutylzinndilaurat | 0,1 |
| | Omyacarb 4BG ® | 63,1 |
| | Calciumoxid | 5,0 |
| B-Komponente | Desmodur CD ® | 2,8 |

Das so erhaltene Klebeband wies eine Reißfestigkeit von 1,7 N/mm² bei einer Reißdehnung von 124 % auf. Die Klebkraft auf Stahl betrug 2,5 N/cm. Das Klebeband war ausreichend sandstrahlbeständig und leicht stanzbar.

### Beispiel 4

Zur Herstellung eines bei geringer Krafteinwirkung wenig dehnbaren, sandstrahlbeständigen, stanzbaren Schablonen-Klebebandes wurde das Verfahren in der folgenden Weise eingesetzt:

### 1. Verfahrensschritt (Vorbereitungsschritt), Herstellen des zulaufenden Materials 1:

Eine lösungsmittelbasierte Acrylat-Haftklebemasse, bestehend aus Butylacrylat (47,5%), Ethylhexylacrylat (47,5%), Glycidylmethacrylat (2%), Acrylsäure (3%) und geringen Mengen eines bekannten Vernetzers wurde in einer Auftragsstärke von 40 g/m² auf einem handelsüblichem, schwachgekreppten Papierträger mit einem Flächengewicht von 68 g/m² ausgestrichen, getrocknet, vernetzt und beim Aufwickeln mit einem handelsüblichen Trennpapier eingedeckt.

### 2. Verfahrensschritt, Polyurethan-Beschichtung:

Der mit der Haftklebemasse ausgerüstete, schwachgekreppte Papierträger wurde im 2. Verfahrensschritt von der nicht klebenden Seite her mit einer entgasten, zweikomponentigen Polyurethan-Trägermasse bei einer Geschwindigkeit von 3 m/min beschichtet. Die Auftragsstärke betrug 850 µm. Die Aushärtung erfolgte bei einer Kanaltemperatur von 60 bis 70 °C.

Die Polyurethan-Trägermasse setzte sich wie folgt zusammen:

| | Rohstoff | Gewichtsanteil [Gew.-%] |
|---|---|---|
| A-Komponente | Arcol 1042 ® | 29,0 |
| | Dibutylzinndilaurat | 0,1 |
| | Omyacarb 4BG ® | 63,1 |
| | Calciumoxid | 5,0 |
| B-Komponente | Desmodur CD ® | 2,8 |

Das so erhaltene Klebeband war ausreichend sandstrahlbeständig und leicht stanzbar. Die Klebkraft auf Stahl betrug 2,1 N/cm.

### Beispiel 5

Zur Herstellung eines bei geringer Krafteinwirkung nicht dehnbaren, sandstrahlbeständigen, stanzbaren Schablonen-Klebebandes wurde das Verfahren in der folgenden Weise eingesetzt:

### 1. Verfahrensschritt (Vorbereitungsschritt), Herstellen des zulaufenden Materials 1:

Eine lösungsmittelbasierte Acrylat-Haftklebemasse, bestehend aus Butylacrylat (47,5%), Ethylhexylacrylat (47,5%), Glycidylmethacrylat (2%), Acrylsäure (3%) und geringen Mengen eines bekannten Vernetzers wurde in einer Auftragsstärke von 40 g/m² auf einer handelsüblichen 23 µm dicken Polyesterfolie (Polyethylenterephthalat) ausgestrichen, getrocknet, vernetzt und beim Aufwickeln mit einem handelsüblichen Trennpapier eingedeckt.

### 2. Verfahrensschritt, Polyurethan-Beschichtung:

Die mit der Haftklebemasse ausgerüstete Polyesterfolie wurde im 2. Verfahrensschritt von der nicht klebenden Seite her mit einer entgasten, zweikomponentigen Polyurethan-Trägermasse bei einer Geschwindigkeit von 3 m/min beschichtet. Die Auftragsstärke betrug 850 µm. Die Aushärtung erfolgte bei einer Kanaltemperatur von 60 bis 70 °C. Die Polyurethan-Trägermasse setzte sich wie folgt zusammen:

| | Rohstoff | Gewichtsanteil [Gew.-%] |
|---|---|---|
| A-Komponente | Arcol 1042 ® | 29,0 |
| | Dibutylzinndilaurat | 0,1 |
| | Omyacarb 4BG ® | 63,1 |
| | Calciumoxid | 5,0 |
| B-Komponente | Desmodur CD ® | 2,8 |

Das so erhaltene Klebeband war ausreichend sandstrahlbeständig und leicht stanzbar. Die Klebkraft auf Stahl betrug 2,8 N/cm.

### Beispiel 6

Zur Herstellung eines elastischen, leicht in Kurven verklebbaren Abdeckbands für allgemeine Maler- und Lackierarbeiten wurde das Verfahren in der folgenden Weise eingesetzt:

### 1. Verfahrensschritt (Vorbereitungsschritt), Herstellen des zulaufenden Materials 1:

Eine lösungsmittelbasierte Acrylat-Haftklebemasse, bestehend aus Butylacrylat (47,5%), Ethylhexylacrylat (47,5%), Glycidylmethacrylat (2%), Acrylsäure (3%) und geringen Mengen eines bekannten Vernetzers wurde in einer Auftragsstärke von 40 g/m² auf handelsüblichem doppelseitigen Trennpapier ausgestrichen, getrocknet, vernetzt und anschließend aufgewickelt.

### 2. Verfahrensschritt, Polyurethan-Beschichtung:

Die auf dem Trennpapier ausgestrichene Acrylat-Haftklebemasse wurde im 2. Verfahrensschritt direkt mit einer entgasten, zweikomponentigen Polyurethan-Trägermasse bei einer Geschwindigkeit von 3 m/min beschichtet Die Auftragsstärke betrug 300 µm. Die Aushärtung erfolgte bei einer Kanaltemperatur von 60 bis 70 °C.

Die Polyurethan-Trägermasse setzte sich wie folgt zusammen:

| | Rohstoff | Gewichtsanteil [Gew.-%] |
|---|---|---|
| A-Komponente | Arcol 1074 ® | 31,5 |
| | Lutensol A07 ® | 3,3 |
| | Dibutylzinndilaurat | 0,1 |
| | Calciumoxid | 7,9 |
| | Omyacarb 4BG ® | 53,9 |
| B-Komponente | Desmodur CD ® | 3,3 |

Das so erhaltene Klebeband wies eine Reißfestigkeit von 2,1 N/mm² bei einer Reißdehnung von 194 % auf. Die Klebkraft auf Stahl betrug 2,5 N/cm. Das Klebeband war überlackierbar und in Kurven verklebbar.

### Beispiel 7

Zur Herstellung eines Kantenschutz-Klebebandes wurde das Verfahren in der folgenden Weise eingesetzt:

### 1. Verfahrensschritt (Vorbereitungsschritt), Herstellen des zulaufenden Materials 1:

Eine lösungsmittelbasierte Acrylat-Haftklebemasse, bestehend aus Butylacrylat (47,5%), Ethylhexylacrylat (47,5%), Glycidylmethacrylat (2%), Acrylsäure (3%) und geringen Mengen eines bekannten Vernetzers wurde in einer Auftragsstärke von 40 g/m² auf einem Gewebeträger aus dicht gewebten Polyester (20x20 Fäden pro cm in Kette- und Schuß-Richtung, Feinheit: 34 Nm, Flächengewicht > 130 g/m²) ausgestrichen, getrocknet, vernetzt und beim Aufwickeln mit einem handelsüblichen Trennpapier eingedeckt.

### 2. Verfahrensschritt, Polyurethan-Beschichtung:

Das mit der Haftklebemasse ausgerüstete Gewebe wurde im 2. Verfahrensschritt von der nicht klebenden Seite her mit einer entgasten, zweikomponentigen Polyurethan-Trägermasse bei einer Geschwindigkeit von 3 m/min beschichtet. Die Auftragsstärke betrug 400 µm. Die Aushärtung erfolgte bei einer Kanaltemperatur von 60 bis 70 °C. Die Polyurethan-Trägermasse setzte sich wie folgt zusammen:

| | Rohstoff | Gewichtsanteil [Gew.-%] |
|---|---|---|
| A-Komponente | Arcol 1042 ® | 29,0 |
| | Dibutylzinndilaurat | 0,1 |
| | Omyacarb 4BG ® | 63,1 |
| | Calciumoxid | 5,0 |
| B-Komponente | Desmodur CD ® | 2,8 |

Das so erhaltene Klebeband wies eine Reißfestigkeit von 19,1 N/mm² bei einer Reißdehnung von 24 % auf. Die Klebkraft auf Stahl betrug 2,9 N/cm.

### Beispiel 8

Zur Herstellung eines besonders kostengünstigen Kantenschutz-Klebebandes wurde das Verfahren in der folgenden Weise eingesetzt:

### 1. Verfahrensschritt (Vorbereitungsschritt), Herstellen des zulaufenden Materials 1:

Eine lösungsmittelbasierte Acrylat-Haftklebemasse, bestehend aus Butylacrylat (47,5%), Ethylhexylacrylat (47,5%), Glycidylmethacrylat (2%), Acrylsäure (3%) und geringen Mengen eines bekannten Vernetzers wurde in einer Auftragsstärke von 40 g/m² auf einem 150 µm dicken Polyester-Spinnvlies mit einem Flächengewicht von 70 g/m² ausgestrichen, getrocknet, vernetzt und beim Aufwickeln mit einem handelsüblichen Trennpapier eingedeckt.

### 2. Verfahrensschritt, Polyurethan-Beschichtung:

Das mit der Haftklebemasse ausgerüstete Spinnvlies wurde im 2. Verfahrensschritt von der nicht klebenden Seite her mit einer entgasten, zweikomponentigen Polyurethan-Trägermasse bei einer Geschwindigkeit von 3 m/min beschichtet. Die Auftragsstärke betrug 400 µm. Die Aushärtung erfolgte bei einer Kanaltemperatur von 60 bis 70 °C. Die Polyurethan-Trägermasse setzte sich wie folgt zusammen:

| | Rohstoff | Gewichtsanteil [Gew.-%] |
|---|---|---|
| A-Komponente | Arcol 1042 ® | 29,0 |
| | Dibutylzinndilaurat | 0,1 |
| | Omyacarb 4BG ® | 63,1 |
| | Calciumoxid | 5,0 |
| B-Komponente | Desmodur CD ® | 2,8 |

Das so erhaltene Klebeband wies eine Reißfestigkeit von 9,8 N/mm² bei einer Reißdehnung von 18 % auf. Die Klebkraft auf Stahl betrug 2,6 N/cm.

### Beispiel 9

Zur Herstellung eines Klischee-Montage-Klebebandes für die Druckindustrie wurde das Verfahren in der folgenden Weise eingesetzt:

### 1. Verfahrensschritt (Vorbereitungsschritt), Herstellen des zulaufenden Materials 1:

Eine lösungsmittelbasierte Acrylat-Haftklebemasse, bestehend aus Ethylhexylacrylat (70%), Stearylacrylat (17%), Acrylsäure (3%) und bekannten Harzen (10 %) wurde in einer Auftragsstärke von 60 g/m² auf handelsüblichem doppelseitigen Trennpapier ausgestrichen, getrocknet und anschließend aufgewickelt.

### 2. Verfahrensschritt (Vorbereitungsschritt), Herstellen des zulaufenden Materials 2:

Verfahrensschritt 1 wurde wiederholt.

### 3. Verfahrensschritt, Polyurethan-Beschichtung:

Zwischen den auf den Trennpapieren ausgestrichenen Acrylat-Haftklebemassen aus den Verfahrensschritten 1 und 2 erfolgte die Beschichtung mit einer entgasten, zweikomponentigen Polyurethan-Trägermasse bei einer Geschwindigkeit von 1 m/min. Die Auftragsstärke betrug 1,5 mm. Die Aushärtung erfolgte bei einer Kanaltemperatur von 90 °C.

Die Polyurethan-Trägermasse setzte sich wie folgt zusammen:

| | Rohstoff | Gewichtsanteil [Gew.-%] |
|---|---|---|
| A-Komponente | Arcol 1042 ® | 41,0 |
| | Arcol 1043 ® | 41,0 |
| | Dibutylzinndilaurat | 0,2 |
| | Kronos 2160 ® | 1,6 |
| | Calciumoxid | 5,0 |
| | Aerosil R 202 ® | 3,5 |
| B-Komponente | Vestanat IPDI ® | 7,7 |

Das so erhaltene Klebeband wies eine Stauchhärte H₁₄ von 22 N/cm² auf. Die Klebkraft auf Stahl betrug 3,4 N/cm.

### Beispiel 10

Zur Herstellung eines Mikroballon-geschäumten Klischee-Montage-Klebebandes für die Druckindustrie wurde das Verfahren in der folgenden Weise eingesetzt:

### 1. Verfahrensschritt (Vorbereitungsschritt), Herstellen des zulaufenden Materials 1:

Eine lösungsmittelbasierte Acrylat-Haftklebemasse, bestehend aus Ethylhexylacrylat (70%), Stearylacrylat (17%), Acrylsäure (3%) und bekannten Harzen (10 %) wurde in einer Auftragsstärke von 60 g/m² auf handelsüblichem doppelseitigen Trennpapier ausgestrichen, getrocknet und anschließend aufgewickelt.

### 2. Verfahrensschritt (Vorbereitungsschritt), Herstellen des zulaufenden Materials 2:

Verfahrensschritt 1 wurde wiederholt.

### 3. Verfahrensschritt, Polyurethan-Beschichtung:

Zwischen den auf den Trennpapieren ausgestrichenen Acrylat-Haftklebemassen aus den Verfahrensschritten 1 und 2 erfolgte die Beschichtung mit einer entgasten, zweikomponentigen Polyurethan-Trägermasse bei einer Geschwindigkeit von 1 m/min. Die Auftragsstärke betrug 1,5 mm. Die Aushärtung erfolgte bei einer Kanaltemperatur von 90 °C.

Die Polyurethan-Trägermasse enthielt vorexpandierte, thermoplastische Kunststoffhohlkugeln (Expancel®) und setzte sich wie folgt zusammen:

| | Rohstoff | Gewichtsanteil [Gew.-%] |
|---|---|---|
| A-Komponente | Arcol 1042 ® | 39,5 |
| | Arcol 1043 ® | 39,5 |
| | Dibutylzinndilaurat | 0,2 |
| | Kronos 2160 ® | 1,9 |
| | Calciumoxid | 5,0 |
| | Expancel 551 DE 80 ® | 3,0 |
| | Aerosil R 202 ® | 3,5 |
| B-Komponente | Vestanat IPDI ® | 7,4 |

Das so erhaltene Klebeband wies eine Stauchhärte H₁₄ von 30 N/cm² auf. Die Klebkraft auf Stahl betrug 2,9 N/cm.

### Beispiel 11

Zur Herstellung eines Stickstoff-geschäumten Klischee-Montage-Klebebandes für die Druckindustrie wurde das Verfahren in der folgenden Weise eingesetzt:

### 1. Verfahrensschritt (Vorbereitungsschritt), Herstellen des zulaufenden Materials 1:

Eine lösungsmittelbasierte Acrylat-Haftklebemasse, bestehend aus Ethylhexylacrylat (70%), Stearylacrylat (17%), Acrylsäure (3%) und bekannten Harzen (10 %) wurde in einer Auftragsstärke von 60 g/m² auf handelsüblichem doppelseitigen Trennpapier ausgestrichen, getrocknet und anschließend aufgewickelt.

### 2. Verfahrensschritt (Vorbereitungsschritt), Herstellen des zulaufenden Materials 2:

Verfahrensschritt 1 wurde wiederholt.

### 3. Verfahrensschritt, Polyurethan-Beschichtung:

Zwischen den auf den Trennpapieren ausgestrichenen Acrylat-Haftklebemassen aus den Verfahrensschritten 1 und 2 erfolgte die Beschichtung mit einer entgasten, zweikomponentigen Polyurethan-Trägermasse bei einer Geschwindigkeit von 1 m/min. In die Polyurethan-Trägermasse wurde direkt am Mischkopf Stickstoff eingetragen, so daß der ausgehärtete Träger eine Dichte von 0,7 g/cm³ aufwies. Die Auftragsstärke betrug 1,5 mm. Die Aushärtung erfolgte bei einer Kanaltemperatur von 90 °C.

Die Polyurethan-Trägermasse setzte sich wie folgt zusammen:

| | Rohstoff | Gewichtsanteil [Gew.-%] |
|---|---|---|
| A-Komponente | Arcol 1030 ® | 17,0 |
| | Arcol 1067S ® | 40,0 |
| | Dibutylzinndilaurat | 0,2 |
| | Kronos 2160 ® | 2,4 |
| | Calciumoxid | 9,0 |
| | Aerosil R 202 ® | 3,5 |
| B-Komponente | Vestanat IPDI ® | 27,9 |

Das so erhaltene Klebeband wies eine Stauchhärte H₁₄ von 28 N/cm² auf. Die Klebkraft auf Stahl betrug 2,7 N/cm.

## Patentansprüche

1. Verfahren zur kontinuierlichen Herstellung von selbstklebenden Artikeln, wobei
a) in einem Behälter A im wesentlichen eine Polyol- und in einem Behälter B im wesentlichen eine Isocyanat-Komponente vorgelegt werden,
b) in einem Mischer die Polyol- und die Isocyanat-Komponente gemischt werden,
c) die somit gemischte Polyurethanmasse auf ein mit einer druckempfindlichen Haftklebemasse beschichtetes Trägermaterial aufgebracht wird,
c2) auf die Polyurethanmasse des Laminats ein zweites Trägermaterial zugeführt wird
d) das Laminat aus erstem Trägermaterial, Haftklebemasse und Polyurethanmasse durch einen Wärmekanal geführt wird, in dem die Polyurethanmasse aushärtet,
d2) nach dem Wärmekanal das zweite Trägermaterial abgezogen wird,
e) das Laminat in einer Wickelstation aufgewickelt wird.

2. Verfahren nach Anspruch 1, **dadurch gekennzeichnet, dass** das zweite Trägermaterial mit einer druckempfindlichen Haftklebemasse ausgerüstet ist.

3. Verfahren nach den Ansprüchen 1 bis 2, **dadurch gekennzeichnet, dass** weitere Behälter vor dem Mischer vorhanden sind, in denen sich Katalysatoren, Weichmacher, Farbstoffe und andere Zusatzstoffe befinden, die vorgelegt und zugesetzt werden können.

4. Verfahren nach den Ansprüchen 1 bis 3, **dadurch gekennzeichnet, dass** Polyurethanmasse derartig auf das mit einer druckempfindlichen Haftklebemasse beschichtete erste Trägermaterial aufgebracht wird, dass sich die Polyurethanmasse auf der druckempfindlichen Haftklebemasse befindet.

5. Verfahren nach den Ansprüchen 1 bis 4, **dadurch gekennzeichnet, dass** als erstes oder zweites Trägermaterial dehäsiv ausgerüstete Medien verwendet werden, wie ein Trennpapier oder eine Trennfolie oder Papier, Gewebe, Vlies, Folie oder ein Elastomer.

6. Verfahren nach den Ansprüchen 1 bis 5, **dadurch gekennzeichnet, dass** sich das erste und das zweite Trägermaterial mit konstanter Geschwindigkeit bewegen.

## Claims

1. Process for continuous production of self-adhesive articles, wherein
a) essentially one polyol component is placed in a container A and essentially one isocyanate component is placed in a container B,
b) the polyol component and the isocyanate component are mixed in a mixer,
c) the polyurethane composition thus mixed is applied to a backing material which is coated with a pressure-sensitive adhesive composition,
c2) a second backing material is supplied to the polyurethane composition of the laminate,
d) the laminate, comprising first backing material, pressure-sensitive adhesive composition and polyurethane composition, is passed through a heat tunnel, in which the polyurethane composition cures,
d2) after the heat tunnel, the second backing material is peeled off,
e) the laminate is wound in a winding station.

2. Process according to Claim 1, **characterized in that** the second backing material has been treated with a pressure-sensitive adhesive composition.

3. Process according to either of Claims 1 and 2, **characterized in that** upstream of the mixer there are further containers for catalysts, plasticizers, dyes and other additives, which may be introduced and added.

4. Process according to any of Claims 1 to 3, **characterized in that** polyurethane composition is applied to the first backing material coated with a pressure-sensitive adhesive composition, said application taking place in such a way that the polyurethane composition is present on the pressure-sensitive adhesive composition.

5. Process according to any of Claims 1 to 4, **characterized in that** the first or second backing material used comprises dehesive media, such as a release paper or a release film or paper, woven, nonwoven, film, or an elastomer.

6. Process according to any of Claims 1 to 5, **characterized in that** the first and second backing material move at constant speed.

## Revendications

1. Procédé de fabrication en continu d'articles autocollants, dans lequel:
a) on place essentiellement un composant polyol dans un récipient A et essentiellement un composant isocyanate dans un récipient B,
b) dans un mélangeur, on mélange le composant polyol et le composant isocyanate,
c) la pâte de polyuréthane ainsi mélangée est appliquée sur un matériau de support revêtu d'une pâte d'adhésif sensible à la pression,
c2) un deuxième matériau de support est apporté sur la pâte de polyuréthane du stratifié,
d) le stratifié constitué du premier matériau de support, de la pâte adhésive et de la pâte de polyuréthane est amené dans un canal de chauffage dans lequel la pâte de polyuréthane durcit,
d2) après le canal de chauffage, le deuxième matériau de support est enlevé et
e) le stratifié est ensuite enroulé dans un poste d'enroulement.

2. Procédé selon la revendication 1, **caractérisé en ce que** le deuxième matériau de support est doté d'une pâte d'adhésif sensible à la pression.

3. Procédé selon les revendications 1 à 2, **caractérisé en ce que** d'autres récipients dans lesquels se trouvent des catalyseurs, des plastifiants, des colorants et d'autres additifs qui peuvent être préparés et ajoutés sont prévus en amont du mélangeur.

4. Procédé selon les revendications 1 à 3, **caractérisé en ce que** la pâte de polyuréthane est appliquée sur le premier matériau de support revêtu d'une pâte d'adhésif sensible à la pression de telle sorte que la pâte de polyuréthane soit située sur la pâte d'adhésif sensible à la pression.

5. Procédé selon les revendications 1 à 4, **caractérisé en ce que** comme premier ou deuxième matériau de support, on utilise des supports rendus non adhésifs, par exemple un papier de séparation ou un film de séparation ou du papier, du tissu, un non-tissé, un film ou un élastomère.

6. Procédé selon les revendications 1 à 5, **caractérisé en ce que** le premier et le deuxième matériau de support se déplacent à vitesse constante.
